# EUROPÄISCHE PATENTANMELDUNG

(11) **EP 2 085 880 A2**
(43) Veröffentlichungstag der Anmeldung: **05.08.2009**
(21) Anmeldenummer: 09006345.4
(22) Anmeldetag: 13.12.2001
(51) Int. Cl.: G06F 9/44, G06F 17/30

(54) **Addon-Mechanismus für ein Steuerungssystem bzw. für ein Engineeringsystem basierend auf einem Typdatenfeld**

(30) Priorität: 22.12.2000 DE 10065955; 15.06.2001 DE 10128959
(62) Teilanmeldung aus: 01129754.6
(71) Anmelder: SIEMENS AKTIENGESELLSCHAFT, 80333 München (DE)
(72) Erfinder: Rosenberg, Jens Ansgar, 90459 Nürnberg (DE); Wagner, Peter, 91217 Hersbruck (DE)

(57) **Zusammenfassung**

Die flexible Erweiterung eines Steuersystems soll ohne Eingriff in das originäre Objektmodell und damit der Steuerungssoftware möglich sein. Hierzu wird vorgeschlagen, an Objektdaten Datenelemente, die Registrierungsinformation für bestehende und neu hinzugefügte Tools enthalten, anzufügen. Ein Objekttyp kann dann wahlweise für die bestehenden oder neuen Tools instanziiert werden. Somit lassen sich Erweiterungen nachträglich instanziieren, ohne das bestehende Objektmodell in seinem Wesen zu beeinflussen.

## Beschreibung

Die vorliegende Erfindung betrifft eine Vorrichtung und ein Verfahren zum Steuern oder Regeln eines Systems basierend auf einem Objektmodell, welches die Funktionalität eines Runtimesystems und/oder des zu steuernden bzw. zu regelnden Systems repräsentiert, wobei das Objektmodell Objekttypen mit vorbestimmter Datenstruktur umfasst, welche Objekttypen von einem oder mehreren internen Standardtools verarbeitbar sind.

Moderne industrielle Steuerungen bestehen in der Regel aus einem sogenannnten Engineering- und einem so genannten Runtimesystem. Mit dem Engineeringsystem wird ein Steuerungsprogramm entwickelt, welches dann anschließend in das Runtimesystem geladen wird. Das Runtimesystem gewährleistet dann die Zeitablaufsteuerung des zu steuernden Systems.

Die Funktionalität des zu steuernden Systems und/oder des Runtimesystems lässt sich durch ein Objektmodell ausdrücken. Das Objektmodell hat Wirkung im Engineeringsystem und/oder Runtimesystem und ist Basis für das Engineering der Steuerung, beispielsweise die Inbetriebnahme, Programmierung etc. Darüber hinaus ist das Objektmodell Basis für die Datenhaltung der Steuerung. Die Elemente des Objektmodells lassen sich in verschiedene Objekttypen kategorisieren. Der Objekttyp ist die softwaretechnische Form einer Beschreibung von Objektinstanzen. In der einfachsten Ausprägung bezieht sich diese Beschreibung auf die Datenstruktur, die durch eine Objektinstanz im Speicher repräsentiert wird. In heutigen Systemen beschreibt der Objekttyp auch Operationen, die auf diesen Datenstrukturen durchgeführt werden können und verleiht den Objektinstanzen somit auch eine Funktionalität. Einer dieser Objekttypen sind beispielsweise Programmcontainer, die zur Verwaltung und Ablage von Anwenderprogrammen dienen. Weitere Objekttypen sind Technologieobjekttypen wie beispielsweise für Positionierachsen, Gleichlaufachsen, Messtaster, Kurvenscheiben etc., deren Funktionalität datentechnisch im jeweiligen Objekttyp hinterlegt ist. Ein bedeutender Objekttyp sind ferner so genannte "devices", die zur Verwaltung und Ablage der Hardware-Konfigurationseinstellungen dienen.

Alle Objekttypen sind instanziierbar, d.h. konkret ausgestaltbar. So kann beispielsweise einem Gleichlaufobjekt ein konkretes Übersetzungsverhältnis zugewiesen werden. Die Technologieobjekttypen können in Form von Technologiepaketen organisiert sein. Die Instanziierung erfolgt in der Regel im Engineeringsystem. Das Laden der instanziierten Objekte in das Runtimesystem stößt die Instanziierung entsprechender Objekte im Runtimesystem an, auf die die Daten der Objekte des Engineeringsystems übertragen werden.

Eine Objektinstanz ist zunächst eine Datenstruktur im Speicher eines Rechensystems. Aus einem Objekttyp können beliebig viele (soweit es das zugrundeliegende Rechensystem erlaubt) Objektinstanzen instanziiert werden. Die Größe und Einteilung der Datenstruktur einer jeden Objektinstanz folgt dabei der durch den Objekttyp gegebenen Beschreibung. Objektinstanzen werden zur Laufzeit eines Editors, also während das Programmsystem auf einem Rechensystem im Engineeringsystem ausgeführt wird, angelegt.

Das Objektmodell umfasst eine Menge von Objekttypen und beschreibt die Relationen zwischen aus den Objekttypen instanziierten Objektinstanzen. Der Aufwand für die Erstellung neuer Objekttypen, die sich in ein komplexes Objektmodell einfügen sollen, kann vergleichsweise groß sein.

Im Engineeringsystem kann mit verschiedenen Tools auf Objekte (Instanzen) bestimmter Objekttypen zugegriffen werden. D.h. die Objekttypen werden bei der Erstellung des Softwaresystems festgelegt und können im Engineeringsystem nicht mehr geändert werden. Dementsprechend erlaubt das Engineeringsystem einen oder mehrere Views auf die Instanzen bestimmter Objekttypen. Im Rahmen der Programmierung können dies beispielsweise verschiedene Editoren für eine textuelle oder graphische Anwenderprogrammierung sein.

Die Tools und Views des Engineeringsystems werden auch als SnapIns bezeichnet. Dem Engineeringsystem können neben den im Grundsystem vorhandenen SnapIns weitere SnapIns hinzugefügt werden.

Ein Objekttyp ist mehr als nur die Beschreibung einer Datenstruktur. Er umfasst auch Operationen, die auf und mit Instanzen dieser Datenstruktur durchgeführt werden können. Die internen Tools des Basisengineeringsystems greifen auf Instanzen der Objekttypen zu. Objekttypen selbst werden in der Regel vom Anwender nicht mehr geändert.

Grundsätzlich unterliegen auch Engineeringsysteme wie jede andere Software einer ständigen Erneuerung, Erweiterung und Verbesserung. Bei heutigen Realisierungsmechanismen für Steuerungserweiterungen kommt es aber zu folgenden Problemen: Das Einbringen einer neuen Programmiersicht, z.B. das Einbringen graphischer Programmierung neben textueller Programmierung, ist heute nicht in integrierter Art und Weise möglich, ohne die Grundfunktionalität des Engineeringsystems zu erweitern. Eine mögliche externe Erweiterung durch externe Tools erfordert eine eigene Datenhaltung, die dann nicht in das bestehende System integriert ist. Darüber hinaus ist die Erweiterung einer bestehenden, beispielsweise graphischen Programmiersprache um zusätzliche Programmiericons, wodurch eine Erweiterung der Datenhaltung erforderlich wird, in der Regel nicht ohne Eingriff bzw. Erweiterung in das bestehende Engineeringsystem möglich. So kann beispielsweise ein bestehender Flow-Chart-Editor nicht ohne weiteres um Icons für bestimmte Bibliotheksfunktionen erweitert werden. Ferner bieten heutige OEM-Schnittstellen nur eine spezifische und eingeschränkte Integrationstiefe in das Engineeringsystem. Schließlich bringen Erweiterungen der Engineeringsystemfunktionalität über externe Tools in der Regel Konsistenzprobleme in der Datenhaltung mit sich.

Aus der Druckschrift US 6,064,812 A ist ein System und Verfahren zum Entwickeln von Automationskomponenten mit Hilfe eines graphischen Datenflussprogramms bekannt. Das Programm basiert auf einem Objektmodell, wobei Objekte aus einer Automatisierungsklasse instanziiert werden.

In dem Artikel von HAMILTON J. "INTERLANGUAGE OBJECT SHARING WITH SOM", CONFERENCE ON OBJECT-ORIENTED TECHNOLOGIES, 17. Juni 1996 (1996-06-17), Seiten 35 - 51, XP000645576 ist ein Objektmodell beschrieben, bei dem durch Ändern einer Klasse eine neue Version einer Klasse geschaffen werden kann. So können durch Hinzufügen neuer Instanzvariablen neue Objekte geschaffen werden, die eine Neukompilierung nicht erfordern.

Ferner beschreibt die Druckschrift "Inside Macintosh: Macintosh Toolbox Essentials", [Online] 1992, APPLE COMPUTER INC., XP002311286, Gefunden im Internet: URL:http://developer.apple.com/documentation/mac/pdf/Macin-toshToolboxEssentials.pdf> [gefunden am 2004-12-07] ein Objektmodell des Dateisystems eines Mecintosh-Betriebssystems. Demnach wird beim Erzeugen eines Dokuments diesem ein sogenannter "creator" und ein Dateityp zugeordnet. Anhand des Creator-Felds kann eine bestimmte Applikation beispielsweise durch Doppelklicken auf ein Dokument gestartet werden. Entsprechend dem Creator können auch andere Standardtools gestartet werden. Eine Ergänzung dieses Objektmodells ist in "Inside Macintosh: More Macintosh Toolbox", [Online] 1993, APPLE COMPUTER INC., XP002311291, Gefunden im Internet: URL:http://developer.apple.com/documentation/mac/pdf/MoreMa-cintoshToolbox.pdf> [gefunden am 2004-12-07] beschrieben.

Die Aufgabe der vorliegenden Erfindung besteht somit darin, in Bezug auf Steuerungen ein Verfahren für die flexible Erweiterung von Steuerungssystemen zu beschreiben, das ohne Eingriff in das originäre Objektmodell auskommt.

Erfindungsgemäß wird diese Aufgabe gelöst durch ein Vorrichtung zum Steuern oder Regeln eines Systems basierend auf einem Basisobjektmodell, welches die Funktionalität eines Runtimesystems und/oder des zu steuernden bzw. zu regelnden Systems repräsentiert, mit einer Datenverarbeitungseinrichtung zur Verarbeitung eines ersten Objekttyps mit vorbestimmter Datenstruktur, der Bestandteil des Basisobjektmodells und zu Objekten instanziierbar ist, wobei mit der Datenverarbeitungseinrichtung mindestens ein Typdatenfeld an den ersten Objekttyp anbringbar ist und in dem Typdatenfeld Zuordnungsinformation des Objekttyps zu einem Zusatztool, das nicht Teil des Basisobjektmodells ist, ablegbar ist.

Ferner wird die genannte Aufgabe gelöst durch ein Verfahren zum Steuern oder Regeln eines Systems basierend auf einem Basisobjektmodell, welches die Funktionalität eines Runtimesystems und/oder des zu steuernden bzw. zu regelnden Systems repräsentiert, wobei das Objektmodell einen ersten Objekttyp mit vorbestimmter Datenstruktur umfasst, der zu Objekten instanziierbar ist, durch Einlesen oder Erzeugen eines virtuellen Objekttyps mit einem Typdatenfeld und Instanziieren des virtuellen Datentyps zu einem Objekt, bei dem das Typdatenfeld mit Zuordnungsinformation zu einem Zusatztool, das nicht Teil des Basisobjektmodells ist, gefüllt ist.

Vorteilhafte Weiterentwicklungen finden sich in den Unteransprüchen.

Der erfindungsgemäße Erweiterungsmechanismus ermöglicht in vorteilhafter Weise eine skalierbare funktionelle Erweiterung der Steuerungssoftware mit hoher Integrationstiefe im Engineeringsystem ohne Eingriff in die zu Grunde liegende Software. Die Erweiterungen können derart ausgestaltet werden, dass alle bestehenden Engineeringoperationen und Transaktionen auf die Objekttypen, z.B. Browser, Viewer, Kopieren, Einfügen, Import, Export, usw., auch auf die Erweiterungen wirken und in gewohnter Weise genutzt werden können.

Ein weiterer Vorteil besteht darin, dass OEM-Erweiterungen für neue Objekttypen und neue Viewer generisch möglich sind und keine Änderungen der Basissoftware im Engineeringsystem erfordern.

Die vorliegende Erfindung wird nun anhand der beigefügten Zeichnungen näher erläutert, in denen zeigen:
- FIG 1: ein Schema des erfindungsgemäßen funktionellen Zusammenhangs zwischen Tools und Objekten;
- FIG 2: ein Datenstrukturschema eines Erweiterungsmechanismus; und
- FIG 3: eine Kombination der Strukturen gemäß den FIG 1 und 2.

Das folgende Ausführungsbeispiel zeigt eine bevorzugte Anwendung der vorliegenden Erfindung. Einige wichtige Module des Engineeringsystems betreffen die Bereitstellung einer (graphischen) Benutzeroberfläche, über die der Anwender Zugang zu den Projektdaten erhält. Die Repräsentation von im Projekt enthaltenen Objektinstanzen in der Benutzeroberfläche (z.B. Darstellung im Projektbrowser, das Öffnen von Editoren, angebotene Menüs) erfolgt gemäß bestimmter Regeln. In einem bislang bekannten, nicht erweiterbaren System beziehen sich die Regeln auf den Objekttyp der einzelnen Objektinstanzen (z.B. erfolgt die Zuordnung einer Programmobjektinstanz zu einem Structured-Text-Editor anhand der Regel: "Instanzen des Programmtyps werden mit dem Structured-Text-Editor bearbeitet"). Im vorliegenden, erfindungsgemäßen System, dem neue Views/Editoren in Form so genannter SnapIns eingeführt werden können, werden die Regeln von den SnapIns während ihrer Registrierung im Engineeringsystem eingetragen. Die Objekttypen werden dabei durch eindeutige Bezeichner identifiziert.

Die vorliegende Erfindung ermöglicht nun, Regeln für so genannte "virtuelle Typen", die bei der Programmierung des Basisobjektmodells noch nicht bekannt oder berücksichtigt sind und nachträglich vom Benutzer oder Anlagenbauer in ein "privates Objektmodell" aufgenommen werden, einzuführen. Die Formulierung der Regeln erfolgt dabei analog der Formulierung für tatsächlich im Objektmodell vorhandener Objekttypen, nur dass die angegebenen Bezeichner keine im Objektmodell vorhandenen Objekttypen bezeichnen (z.B. die Regel "Instanzen von Flowchartobjekttypen werden im Flowchart-Editor bearbeitet", wobei es im Objektmodell keinen Objekttyp "Flowchart" gibt, sondern nur den Objekttyp "Programm". Der Objekttyp "Flow-chart" ist also ein virtueller Typ.)

Hiermit verbunden ist die Einführung eines oder mehrerer zusätzlicher Datenfelder in die Datenstrukturen, die durch Objekttypen im Objektmodell beschrieben werden. Damit kann ein zusätzlicher Datenwert an jeder Objektinstanz dieser Objekttypen gespeichert werden. SnapIns können, z.B. bei der Erzeugung einer neuen Objektinstanz, diesen Datenwert befüllen, und zwar mit einem Bezeichner für einen virtuellen Typ (z.B. "Flowchart"). Damit finden in der Benutzeroberfläche nicht mehr die Regeln Anwendung, die für den eigentlichen Objekttyp der Objektinstanz angegeben wurden, sondern die Regeln, die für den virtuellen Typ, dessen Bezeichner im dafür reservierten Datenfeld der Objektinstanz abgelegt ist, angegeben wurden.

Auch nach der Erzeugung der Objektinstanz kann der Identifizierer für den virtuellen Typ eingetragen oder modifiziert werden. Auf diese Weise kann dem Anwender in der Benutzeroberfläche eine größere Anzahl vorhandener Objekttypen angeboten werden, als tatsächlich im Objektmodell definiert worden ist. Außerdem können jederzeit neue virtuelle Typen eingeführt werden, ohne dass eine Erweiterung des Objektmodells notwendig ist.

Voraussetzung für dieses Verfahren ist die strikte Unterscheidung der Funktionalitäten im Engineeringsystem: eine Klasse von Funktionalitäten beziehen sich auf den tatsächlichen Objekttyp einer Objektinstanz. Dies sind z.B. alle Funktionen, die die Datenhaltung, den Transfer ins Runtimesystem oder den Lebenszyklus (Erzeugung, Zugriff, Löschung) von Objektinstanzen betreffen. Die andere Klasse von Funktionalitäten bezieht sich dagegen auf den virtuellen Typ, sofern ein solcher in dem neu eingeführten Datenfeld der Objektinstanz eingetragen ist. Wurde kein virtueller Typ eingetragen, dann finden auch bei diesen Funktionalitäten die Regel für den Objekttyp der Objektinstanz Anwendung. Zu dieser Klasse zählen vor allem die schon angeführten Funktionalitäten der Benutzeroberfläche.

Ein Projektbrowser im Engineeringsystem stellt die Projektstruktur dar, indem er Objektinstanzen und ihre Verknüpfungen anzeigt. Es besteht ein unmittelbarer Zusammenhang zwischen Projektstruktur und Objektmodell dahingehend, dass das Objektmodell unter anderem beinhaltet, welche Objektinstanzen in einem Projekt möglicherweise erzeugt werden können und welche Relationen zwischen den Instanzen bestimmter Typen auftreten können.

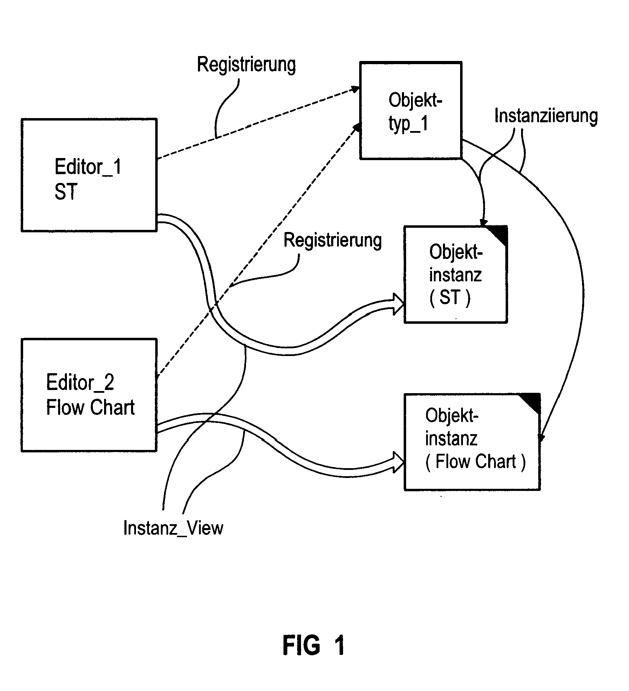

FIG 1 zeigt ein konkretes Beispiel der erfindungsgemäßen Registrierung von mehreren Editoren für einen Objekttyp und dessen Instanziierung in mehrere Objekte. Im vorliegenden Fall wird ein bestehender oder neu hinzuzufügender Structured-Text-Editor Editor_1 ebenso wie ein bestehender oder neu hinzuzufügender Flow-Chart-Editor Editor_2 für einen Objekttyp_1 registriert. Der Objekttyp_1 lässt sich somit im Format Structured-Text und ebenso im Format Flow-Chart instanziieren. Eine jeweilige Instanz-View-Verknüpfung sorgt nun dafür, dass die Structured-Text-Objektinstanz vom Structured-Text-Editor und die Flow-Chart-Objektinstanz vom Flow-Chart-Editor auf Anfrage zur Edition gebracht wird.

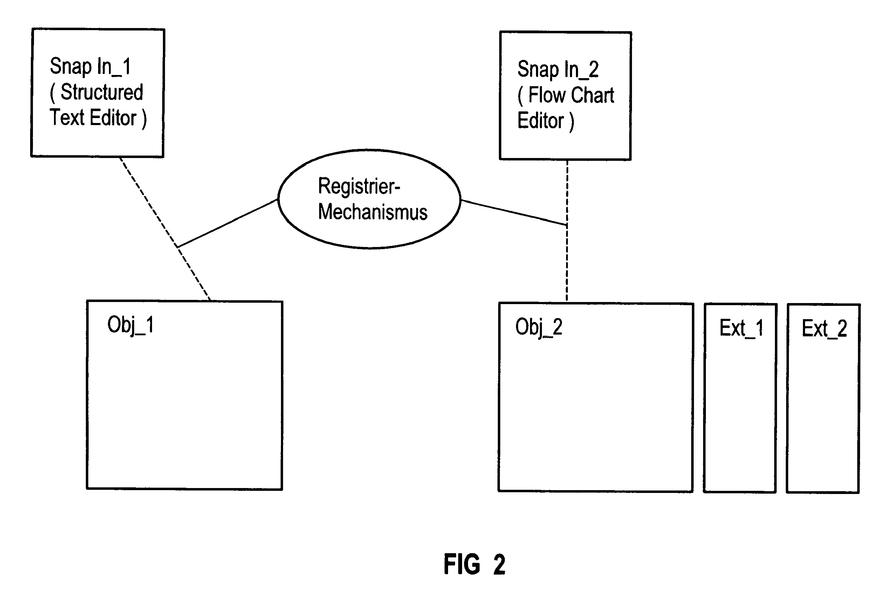

In entsprechenden Fenstern des Projektbrowsers kann der Anwender Objektdaten beobachten bzw. editieren. Im vorliegenden Beispiel enthält die originäre Software für die Steuerung gemäß FIG 2 in der Workbench einen Structured-Text-Editor als SnapIn_1. Das Basisengineeringsystem einer Entwicklungsabteilung bzw. das Engineeringsystem eines Anlagenbauers stellt nach Instanziierung eines Objekttyps ein Objekt Obj_1 zur Verfügung, das für den Structured-Text-Editor registriert ist. Dies bedeutet, dass beim Navigieren auf das Objekt Obj_1 im Projektbrowser automatisch der Structured-Text-Editor aufgerufen wird, so dass das Objekt Obj_1 damit editierbar wird.

Darüber hinaus stellt das Basisengineeringsystem ein Objekt Obj_2 zur Verfügung, das grundsätzlich auch mit dem Structured-Text-Editor editierbar ist. Das Objekt Obj_2 ist durch zwei Erweiterungsdatenelemente Ext_1 und Ext_2 erweitert. Die Anzahl der Erweiterungsdatenelemente, die an das Basisobjekt angeknüpft werden, kann beliebig gewählt werden. Das Objekt Obj_2 mit den beiden Erweiterungsdatenelementen Ext_1 und Ext_2 ist im vorliegenden Fall für den zusätzlichen Flow-Chart-Editor SnapIn_2 registriert. Dies bedeutet, dass beim Navigieren auf das erweiterte Objekt Obj_2 im Projektbrowser automatisch der Flow-Chart-Editor SnapIn_2 abgerufen wird und das Objekt dort zur Edition bereitsteht.

Darüber hinaus können die Erweiterungsdatenelemente anwenderspezifische Daten, z.B. über einen vom Anwender bevorzugten Editor, enthalten.

FIG 2 verdeutlicht somit einen Erweiterungsmechanismus, mit dem ein Basisengineeringsystem ohne Änderung der ursprünglichen Funktionalität um einen zusätzlichen Editor SnapIn_2 erweiterbar ist. Die Erweiterung der Tools bzw. Views für einen Objekttyp wird durch Hinzufügen zusätzlicher Daten am Objekttyp realisiert. Dabei werden ohne Erweiterung der zu Grunde liegenden Engineeringsystemsoftware Daten-Extensions an bestehende Objekttypen angebracht und homogen in die bestehende Datenhaltung integriert. Durch einen Registrierungsmechanismus können sich SnapIns oder ähnliche Erweiterungstools (SnapIn_2) an dem Objekttyp mit der jeweils vorgesehenen Anzahl an Extensions anmelden und für die Tools bzw. Views entsprechende Objektinstanzen erzeugen.

Diese Art der Erweiterungen ermöglicht einerseits deren Integration in die bestehende Projektdatenhaltung und damit eine konsistente Datenhaltung und andererseits deren Integration in das bestehende Objektmodell, d.h. eine Integration in alle mit dem Objektmodell verbundenen Engineeringfunktionalitäten wie beispielsweise Projektbrowser.

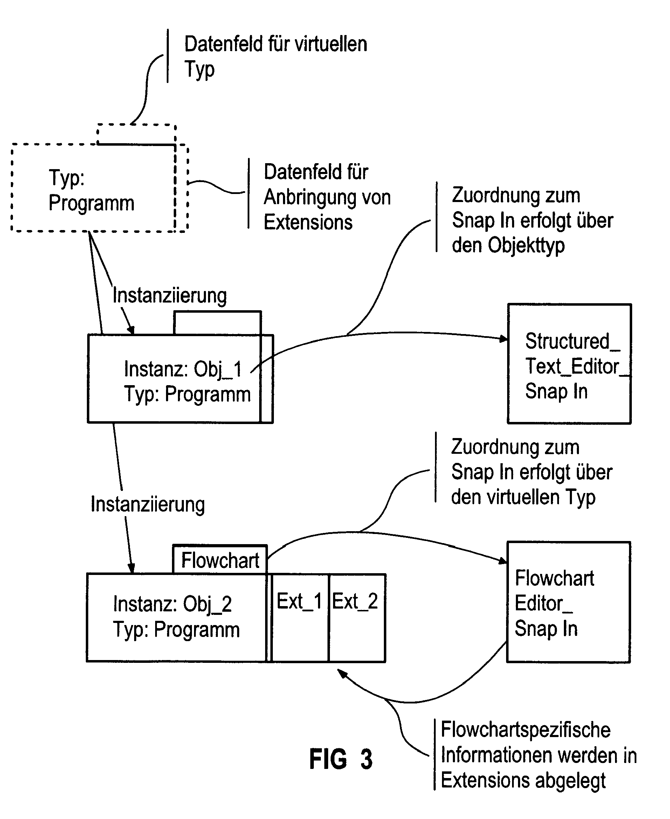

Eine Kombination der Ausführungsformen von FIG 1 und FIG 2 ist in FIG 3 gezeigt. Ein Objekttyp "Programm" wird beim Erzeugen im Engineeringsystem mit einem Datenfeld DV für einen virtuellen Typ versehen. In dem Datenfeld DV ist eine Virtual-Typ-ID-Liste bzw. ein Virtual-Typ-ID-Feld speicherbar, das die Registrierungsinformation für ein Zusatztool bzw. SnapIn aufnehmen kann. Darüber hinaus wird an dem Objekttyp "Programm" ein Datenfeld DE für das Anbringen von Extensions angehängt.

Die Instanziierung des Objekttyps "Programm" kann im Engineeringsystem nun auf zwei Arten erfolgen. Zum einen erfolgt die Instanziierung zu einem Objekt Obj_1, bei dem das Datenfeld DV nicht verwendet wird. Daher erfolgt die Zuordnung zu einem Editor standardmäßig über den Objekttyp "Programm".

Die weitere mögliche Instanziierung bringt ein Objekt Obj_2 hervor. Dabei wird das Datenfeld DV für einen virtuellen Typ, der nicht Teil des Basisobjektmodells ist, zur Registrierung benutzt. Im vorliegenden Fall ist das Objekt Obj_2 für den Flowchart_Editor registriert. D.h. das Virtual-Typ-ID-Feld DV ist mit Zuordnungsinformation für den Flowchart_Editor belegt.

Der Flowchart_Editor verwendet flowchartspezifische Informationen, die in Standardobjekten nicht abgelegt werden können. Da aber das Objekt Obj_2 über ein Datenfeld DE verfügt, können die flowchartspezifischen Informationen in einem oder mehreren Extensions Ext_1, Ext_2 abgelegt werden. Somit kann der Benutzer individuelle SnapIns in vollem Umfang benutzen.

Zusammenfassend weist das oben beschriebene Steuerungssystem folgende Vorteile auf:

die Funktionalität ist über ein Objektmodell repräsentiert

das Objektmodell hat Wirkung im Engineeringsystem und/oder Runtimesystem

das Objektmodell ist Basis für das Engineering der Steuerung (für z.B. Inbetriebnahme, Programmierung,..)

das Objektmodell ist Basis für die Datenhaltung der Steuerung

das auf dem Objektmodell basierende Engineeringsystem der Steuerung ist ohne Eingriff in das Engineeringsystem durch Einbringen von Extensions flexibel erweiterbar

alle bestehenden Engineeringoperationen und Transaktionen auf die Objekttypen (z.B. Browser, Viewer, Kopieren, Einfügen, Import, Export,..) wirken auch auf die Erweiterungen und können in der gleichen Weise genutzt werden, da die Erweiterungen direkt am Objekt erfolgen

OEM-Erweiterungen für Erweiterungen der Objekttypen, neue Views auf bestehende Objekttypen, neue Objekttypen sind generisch möglich und erfordern keine Änderung der Basissoftware (Engineeringsystem)

ein Extensionmechanismus mit generischer Schnittstelle ist vorhanden, um Erweiterungen im Userinterface (neue Editoren, neue Views) und/oder in der Datenhaltung vorzunehmen

neue Engineerfunktionalitäten bzw. neuer Engineering-Views auf bestehende Objekttypen im Objektmodell können hinzugefügt werden

bestehende Objekttypen können durch die Anlage zusätzlicher Daten am Objekttyp erweitert werden

neue Objekttypen können in das vorhandene Objektmodell an beliebiger Stelle hinzugefügt werden.

Es ist eine Vorrichtung zum Steuern oder Regeln eines Systems basierend auf einem Basisobjektmodell, welches die Funktionalität eines Runtimesystems und/oder des zu steuernden bzw. zu regelnden Systems repräsentiert, mit einer Datenverarbeitungseinrichtung zur Verarbeitung eines ersten Objekttyps mit vorbestimmter Datenstruktur, der Bestandteil des Basisobjektmodells und zu Objekten instanziierbar ist, beschrieben, wobei mit der Datenverarbeitungseinrichtung mindestens ein Typdatenfeld (DV) an den ersten Objekttyp anbringbar ist.

Bei einer derartigen Vorrichtung ist mit der Datenverarbeitungseinrichtung ein zweiter Objekttyp, der gegenüber dem ersten Objekttyp ein zusätzliches Erweiterungsdatenfeld umfasst, erzeugbar und/oder verarbeitbar.

Bei zumindest einer der beschriebenen Vorrichtungen ist in dem mindestens einen Typdatenfeld Registrierungsinformation für eines oder mehrere von Standard- oder Zusatztools, insbesondere für einen spezifischen Editor, speicherbar. Zusätzliches kann zutreffen, dass eines der Standardtools ein Standardeditor und/oder -view und eines der Zusatztools ein erweiterter Editor und/oder View mit erweiterter Funktionalität ist, wobei nur letztere einen Zugriff auf das Erweiterungsdatenfeld ermöglichen.

Standardtools, wie Browser, Viewer, Kopieren, Einfügen, Import und Export, sind auf erste und zweite Objekttypen gleichermaßen anwendbar.

Bei zumindest einer der beschriebenen Vorrichtungen ist durch das Typendatenfeld ein virtueller Objekttyp, der nicht Bestandteil des Basisobjektmodells ist, kennzeichenbar und der virtuelle Objekttyp durch das Typdatenfeld einem SnapIn zuordenbar.

Bei zumindest einer der beschriebenen Vorrichtungen umfasst das mindestens eine Typdatenfeld eine Virtual-Typ-Id-Liste, anhand der virtuellen Objekttypen kennzeichenbar sind, die nicht Bestandteil des Basisobjektmodells sind.

Bei einem Verfahren zum Steuern oder Regeln eines Systems basierend auf einem Basisobjektmodell, welches die Funktionalität eines Runtimesystems und/oder des zu steuernden bzw. zu regelnden Systems repräsentiert, wobei das Objektmodell einen ersten Objekttyp mit vorbestimmter Datenstruktur umfasst, der zu Objekten instanziierbar ist, ist dieses Verfahren gekennzeichnet durch ein Einlesen oder Erzeugen eines virtuellen Objekttyps mit einem Typdatenfeld (DV) und durch Instanziieren des virtuellen Datentyps zu einem Objekt (Obj_2), bei dem das Typdatenfeld (DV) mit Zuordnungsinformation zu einem Zusatztool, das nicht Teil des Basisobjektmodells ist, gefüllt ist.

Bei einem derartigen Verfahren umfasst der virtuelle Objekttyp ein gegenüber dem ersten Objekttyp zusätzliches Erweiterungsdatenfeld, in dem Daten von dem oder für das Zusatztool abgelegt werden.

Bei zumindest einem der beschriebenen Verfahren wird in dem Typdatenfeld eine Virtual-Typ-ID-Liste bzw. ein Virtual-Typ-ID-Feld gespeichert, mit der dem der virtuelle Objekttyp bei der Instanziierung eindeutig einem oder mehreren Standard-oder Zusatztools zugeordnet wird. Zusätzlich kann eines der Standardtools ein Standardeditor und/oder -view und eines der Zusatztools ein erweiterter Editor und/oder View mit erweiterter Funktionalität sein und nur letztere einen Zugriff auf das Erweiterungsdatenfeld (DE) ermöglichen.

Die Standardtools, wie Browser, Viewer, Kopieren, Einfügen, Import und Export, sind auf den ersten und zweiten Objekttyp in gleicher Weise anwendbar.

## Patentansprüche

1. Vorrichtung zum Steuern oder Regeln, basierend auf einem Basisobjektmodell, welches die Funktionalität eines Runtimesystems und/oder eines zu steuernden bzw. zu regelnden Systems repräsentiert, mit einer Datenverarbeitungseinrichtung zur Verarbeitung eines ersten Objekttyps mit vorbestimmter Datenstruktur, der Bestandteil des Basisobjektmodells und zu Objekten instanziierbar ist, **dadurch gekennzeichnet, dass** das Objektmodell auf ein Engineeringsystem und auf das Runtimesystem wirkt, wobei der erste Objekttyp mit einem Typdatenfeld (DV) versehen ist und mit der Datenverarbeitungseinrichtung in dem Typdatenfeld Zuordnungsinformation des Objekttyps zu einem Zusatztool, das nicht Teil des Basisobjektmodells ist, ablegbar ist.

2. Vorrichtung nach Anspruch 1, wobei mit der Datenverarbeitungseinrichtung ein zweiter Objekttyp, der gegenüber dem ersten Objekttyp ein zusätzliches Erweiterungsdatenfeld umfasst, erzeugbar und/oder verarbeitbar ist.

3. Vorrichtung nach Anspruch 1 oder 2, wobei die Instanziierung im Engineeringsystem erfolgt.

4. Vorrichtung nach Anspruch 3, wobei ein Laden der instanziierten Objekte in das Runtimesystem eine Instanziierung entsprechender Objekte im Runtimesystem, auf die die Daten der Objekte des Engineeringsystems übertragen werden, anstößt.

5. Vorrichtung nach Anspruch 1 oder 2, wobei ein erster Objekttyp ein Programmcontainer zur Verwaltung und Ablage von Anwenderprogrammen ist.

6. Vorrichtung nach Anspruch 5, wobei ein zweiter Objekttyp ein Technologietyp ist, wobei zumindest ein Technologietyp für eine Positionierachse oder eine Gleichlaufachse oder einen Messtaster oder eine Kurvenscheibe vorgesehen ist, wobei die Funktionalität im jeweiligen Objekttyp hinterlegt ist.

7. Vorrichtung nach Anspruch 6, wobei ein dritter Objekttyp ein Typ zur Verwaltung und Ablage einer Hardware-Konfigurationseinstellung dient.

8. Vorrichtung nach Anspruch 6, wobei die Technologieobjekttypen in Form von Technologiepaketen organisiert sind.

9. Vorrichtung nach einem der Ansprüche 1 bis 3, wobei Views/Editoren in Form von SnapIns vorgesehen sind, wobei Regeln der SnapIns während ihrer Registrierung im Engineeringsystem eingetragen werden und die Objekttypen dabei durch eindeutige Bezeichner identifiziert werden.

10. Vorrichtung nach Anspruch 9, wobei eine erste Regel besagt, dass Instanzen von Flowchartobjekttypen im Flowcharteditor bearbeitet werden, wobei das Objektmodell keinen Objekttyp Flowchart hat, wobei das Objektmodell einen Objekttyp Programm hat und der Objekttyp Flowchart ein virtueller Objekttyp ist.

11. Vorrichtung nach Anspruch 1 oder 2, wobei in dem mindestens einen Typdatenfeld Registrierungsinformation für eines oder mehrere Zusatztools, insbesondere für einen Editor, gespeichert sind.

12. Vorrichtung nach Anspruch 11, wobei das Zusatztool ein erweiterter Editor oder View mit erweiterter Funktionalität ist, der einen Zugriff auf das Erweiterungsdatenfeld ermöglicht.

13. Vorrichtung nach einem der Ansprüche 1 bis 4, wobei durch das Typendatenfeld ein virtueller Objekttyp, der nicht Bestandteil des Basisobjektmodells ist, kennzeichenbar ist und der virtuelle Objekttyp durch das Typdatenfeld einem Zusatztool zuordenbar ist.

14. Vorrichtung nach Anspruch 13, wobei das mindestens eine Typdatenfeld eine Virtual-Typ-Id-Liste umfasst, anhand der virtuellen Objekttypen kennzeichenbar sind, die nicht Bestandteil des Basisobjektmodells sind.

15. Verfahren zum Steuern oder Regeln basierend auf einem Basisobjektmodell, welches die Funktionalität eines Runtimesystems und/oder eines zu steuernden bzw. zu regelnden Systems repräsentiert, wobei das Objektmodell einen ersten Objekttyp mit vorbestimmter Datenstruktur umfasst, der zu Objekten instanziierbar ist, **gekennzeichnet durch**:
Einlesen des ersten Objekttyps welcher mit einem Typdatenfeld (DV) versehen ist Instanziieren des ersten Objekttyps zu einem Objekt (Obj_2), bei dem das Typdatenfeld (DV) mit Zuordnungsinformation zu einem Zusatztool, das nicht Teil des Basisobjektmodells ist, gefüllt ist, wobei das Objektmodell auf ein Engineeringsystem und auf das Runtimesystem wirkt.

16. Verfahren nach Anspruch 15, wobei der erste Objekttyp ein zusätzliches Erweiterungsdatenfeld (DE) umfasst, in dem Daten von dem oder für das Zusatztool abgelegt .werden.

17. Verfahren nach Anspruch 15 oder 16, wobei in dem Typdatenfeld eine Virtual-Typ-ID-Liste bzw. ein Virtual-TYP-ID-Feld gespeichert wird, mit der/dem der erste Objekttyp bei der Instanziierung eindeutig einem oder mehreren Zusatztools zugeordnet wird.

18. Verfahren nach Anspruch 17, wobei das Zusatztool ein erweiterter Editor oder View mit erweiterter Funktionalität ist und einen Zugriff auf das Erweiterungsdatenfeld (DE) ermöglicht.

19. Engineeringsystem zur Entwicklung eines Steuerungsprogramms zum Laden in ein Runtimesystem, wobei das Runtimesystem eine Zeitablaufsteuerung eines zu steuernden Systems gewährleistet, wobei das Runtimesystem auf einem Basisobjektmodell basiert, wobei ein Objekttyp beim Erzeugen im Engineeringsystem mit einem Datenfeld DV für einen virtuellen Typ versehen wird, wobei in dem Datenfeld DV eine Virtual-Typ-ID-Liste bzw. ein Virtual-Typ-ID-Feld speicherbar ist, das die Registrierungsinformation für ein Zusatztool bzw. SnapIn aufnehmen kann, wobei an dem Objekttyp ein Datenfeld für das Anbringen von Extensions angehängt werden kann, wobei die Instanziierung des Objekttyps im Engineeringsystem nun auf eine erste Art erfolgen kann, bei welcher bei der Instanziierung zu einem Objekt das Datenfeld nicht verwendet wird, oder wobei die Instanziierung des Objekttyps auf eine weitere Art erfolgen kann, wobei das Datenfeld für einen virtuellen Typ, der nicht Teil des Basisobjektmodells ist, für eine Registrierung benutzt wird.

20. Engineeringsystem zur Entwicklung eines Steuerungsprogramms zum Laden in ein Runtimesystem, wobei das Runtimesystem eine Zeitablaufsteuerung eines zu steuernden Systems gewährleistet, wobei das Runtimesystem auf einem Basisobjektmodell basiert, wobei ein Projektbrowser im Engineeringsystem eine Projektstruktur darstellt, indem er Objektinstanzen und ihre Verknüpfungen anzeigt, wobei ein unmittelbarer Zusammenhang zwischen Projektstruktur und Objektmodell dahingehend besteht, dass das Objektmodell unter anderem beinhaltet, welche Objektinstanzen in einem Projekt möglicherweise erzeugt werden können und welche Relationen zwischen den Instanzen bestimmter Typen auftreten können.

21. Engineeringsystem nach Anspruch 20, wobei mehrere Editoren für einen Objekttyp registrierbar sind, wobei der Objekttyp in mehrere Objekte instaniierbar ist, wobei ein bestehender oder neu hinzuzufügender Structured-Text-Editor ebenso wie ein bestehender oder neu hinzuzufügender Flow-Chart-Editor für einen ersten Objekttyp registriert ist, wobei der erste Objekttyp sich im Format Structured-Text und ebenso im Format Flow-Chart instanziieren lässt, wobei eine jeweilige Instanz-View-Verknüpfung dafür sorgt, dass die Structured-Text-Objektinstanz vom Structured-Text-Editor und die Flow-Chart-Objektinstanz vom Flow-Chart-Editor auf Anfrage zur Edition gebracht wird.

22. Engineeringsystem nach Anspruch 21, wobei ein zweites Objekt mit einem ersten Erweiterungsdatenelement und einem zweiten Erweiterungselement für den Flow-Chart-Editor registriert ist, wobei der Flow-Chart-Editor ein Snap-In ist.

23. Engineeringsystem nach Anspruch 22, wobei beim Navigieren auf das zweite Objekt im Projektbrowser automatisch der Flow-Chart-Editor abgerufen wird und das Objekt dort zur Edition bereitsteht.

24. Engineeringsystem nach Anspruch 20, wobei Views/Editoren mittels SnapIns eingeführt werden können, wobei Regeln der SnapIns während ihrer Registrierung im Engineeringsystem eingetragen werden, wobei Objekttypen durch eindeutige Bezeichner identifiziert sind, wobei virtuelle Typen, die bei der Programmierung eines Basisobjektmodells noch nicht bekannt oder berücksichtigt sind einführbar sind, wobei die Formulierung der Regeln dabei analog der Formulierung für tatsächlich im Objektmodell vorhandener Objekttypen erfolgt, wobei die angegebenen Bezeichner keine im Objektmodell vorhandenen Objekttypen bezeichnen, wobei eines oder mehrerer zusätzlicher Datenfelder in die Datenstrukturen eingeführt sind, die durch Objekttypen im Objektmodell beschrieben werden, so dass ein zusätzlicher Datenwert an jeder Objektinstanz dieser Objekttypen gespeichert ist, wobei SnapIns diesen Datenwert befüllen, und zwar mit einem Bezeichner für einen virtuellen Typ, wobei damit in einer Benutzeroberfläche nicht mehr die Regeln Anwendung finden, die für den eigentlichen Objekttyp der Objektinstanz angegeben wurden, sondern die Regeln, die für den virtuellen Typ, dessen Bezeichner im dafür reservierten Datenfeld der Objektinstanz abgelegt ist, angegeben wurden.

25. Engineeringsystem nach Anspruch 24, wobei nach der Erzeugung der Objektinstanz der Identifizierer für den virtuellen Typ eintragbar oder modifizierbar ist, wobei auf einer Benutzeroberfläche eine größere Anzahl vorhandener Objekttypen angeboten werden, als tatsächlich im Objektmodell definiert worden sind, wobei neue virtuelle Typen einführbar sind ohne dass eine Erweiterung des Objektmodells notwendig ist.

26. Engineeringsystem nach Anspruch 20, wobei eine strikte Unterscheidung von Funktionalitäten im Engineeringsystem vorliegt, wobei eine Klasse von Funktionalitäten sich auf den tatsächlichen Objekttyp einer Objektinstanz bezieht, wobei dies insbesondere Funktionen betrifft, die die Datenhaltung, den Transfer ins Runtimesystem oder den Lebenszyklus von Objektinstanzen betreffen, wobei die andere Klasse von Funktionalitäten sich auf einen virtuellen Typ beziehen, sofern ein solcher in dem neu eingeführten Datenfeld der Objektinstanz eingetragen ist, wobei wenn kein virtueller Typ eingetragen ist, auch bei diesen Funktionalitäten die Regel für den Objekttyp der Objektinstanz Anwendung findet.
